# EUROPEAN PATENT APPLICATION

(11) **EP 1 696 532 A2**
(43) Date of publication of application: **30.08.2006**
(21) Application number: 06075307.6
(22) Date of filing: 14.02.2006
(51) Int. Cl.: H02J 7/00

(54) **Rechargeable battery with charge control**

(30) Priority: 23.02.2005 US 62846
(71) Applicant: SAFT, 93170 Bagnolet (FR)
(72) Inventor: Matty, Thomas C., Irwin, PA 15624 (US); Hoffman, Philip K., Wilmington, VT 05363 (US)
(74) Representative: Hirsch & Associés

(57) **Abstract**

The battery comprises rechargeable battery cell(s), a current regulator varying a charge current provided to the battery cell(s) and a bypass circuit allowing a discharge current provided by the battery cell(s) to bypass the current regulator. The current regulator can limit the charge current depending on the amperage of the charge current and of the temperature of the current regulator. Two connecting terminals provide the charge current to the battery cell(s) and output the discharge current provided by battery cell(s).

This battery can be used in existing applications to replace other type of batteries for which the current-generating equipment of the application for charging the battery was originally designed without requiring modification thereof.

## Description

### BACKGROUND OF THE INVENTION

### 1. Field of the Invention

The invention relates to rechargeable batteries and in particular rechargeable batteries having a low impedance, which are connected to a power bus on a continuous basis.

### 2. Related Background Art

There exist a number of applications in which a rechargeable battery is connected to a power bus on a continuous basis both for supplying a load and for getting charged. Typical examples comprise aircraft and automotive applications, which make use of lead acid batteries in particular for starting an engine. Another example consists in uninterruptible power supplies (UPS).

It appears desirable to use other types of batteries in such applications instead of lead acid batteries in order to benefit from their advantages. In particular, lithium ion (Li Ion) batteries are contemplated.

However, in the case of low-impedance batteries, the battery causes high charge currents which may damage the battery charger which may not be designed for such low impedance batteries. This is particularly the case for batteries floating on a power bus and which are used to provide periodically a high discharge current such as for starting an automotive or aircraft engine. The high charge current caused by such batteries may damage the current-generating equipment connected to the power bus used to charge the battery.

Further, some type of batteries such as Li-Ion batteries require specific electronics to control the charge thereof especially to prevent overcharging. So, applications designed for working with lead acid batteries or other type of batteries are not adapted to charge safely Li-Ion batteries. In particular, the usual open circuit charge voltage of the battery charger or current-generating equipment would overcharge a Li-Ion battery.

Thus, a drawback results from the fact that replacing the lead acid battery with other types of battery in existing applications requires redesign of the battery charger or current generating equipment of the application.

So, there is a need for a solution allowing to use Li-Ion batteries or other types of batteries in applications which are originally not adapted to work with these types of batteries, but with lead acid batteries or other types of batteries.

There is also a need to provide a solution for controlling the charge current of a battery while making it possible to provide high discharge currents and in particular in applications in which the battery is connected to a power bus on a continuous basis which serves both for supplying a load and for charging the battery.

### SUMMARY OF THE INVENTION

The invention provides a solution for controlling the charge current of a battery while making it possible to provide high discharge currents and in particular in applications in which the battery is connected to a power bus on a continuous basis which serves both for supplying a load and for charging the battery.

The invention also provides a solution allowing to use Li-Ion batteries or other types of batteries in applications which are originally not adapted for charging these types of batteries, but with lead acid batteries or other types of batteries.

In particular, the invention provides a rechargeable battery, comprising:
- at least one rechargeable battery cell;
- a current regulator adapted to vary a charge current provided to the at least one battery cell; and
- a bypass circuit adapted to allow a discharge current provided by the at least one battery cell to bypass the current regulator.

In preferred embodiments, the rechargeable battery comprises any one of the following features or a combination thereof:
- two connecting terminals adapted to connect the battery to an external electric circuit, to provide the charge current to said at least one battery cell and to output the discharge current provided by the at least one battery cell;
- a temperature sensor adapted to sense a temperature of the current regulator and wherein the current regulator is adapted to limit the charge current provided to the at least one cell depending on the temperature sensed by the temperature sensor;
- an overcharge protection circuit adapted to interrupt the charge current provided to the at least one cell when a voltage of the at least one cell is greater than a preset value;
- the current regulator is adapted to limit the charge current depending on the amperage of the charge current which may be determined by a current sensor.

More particularly, the invention further provides a rechargeable battery, comprising:
- at least one rechargeable battery cell;
- two connecting terminals adapted to connect the battery to an external electric circuit, to provide a charge current to the at least one battery cell and to output a discharge current provided by the at least one battery cell;
- a current sensor adapted to sense an amperage of the charge current provided to the at least one cell;
- a current regulator adapted to limit the charge current provided to the at least one cell depending on the amperage sensed by the current sensor; and
- a bypass circuit adapted to allow the discharge current provided by the at least one battery cell to bypass the current regulator;
- the at least one battery cell is of the lithium-ion type.

In preferred embodiments, the rechargeable battery comprises any one of the following features or a combination thereof:
- a transistor adapted to provide a variable resistance and a transistor control circuit wherein the transistor and the at least one battery cell are connected in series between the two connecting terminals; and the transistor control circuit is adapted to vary the resistance provided by the transistor for limiting the charge current provided to the at least one cell depending on the amperage sensed by the current sensor;
- a transistor and a transistor control circuit wherein the transistor and the at least one battery cell are connected in series between the two connecting terminals; and the transistor control circuit is adapted to cause the transistor to work as a chopper having a variable duty cycle and to vary the duty cycle for limiting the charge current provided to the at least one cell depending on the amperage sensed by the current sensor;
- the current sensor comprises a shunt resistor connected in series with the at least one battery cell;
- the bypass circuit is further adapted to allow the discharge current provided by the at least one battery cell to bypass the shunt resistor;
- the bypass circuit comprises a diode connected to allow the discharge current provided by the at least one battery cell to bypass the current regulator;
- a temperature sensor adapted to sense a temperature of the current regulator and wherein the current regulator is further adapted to limit the charge current provided to the at least one cell depending on the temperature sensed by the temperature sensor;
- the temperature sensor comprises a thermistor;
- an overcharge protection circuit adapted to interrupt the charge current provided to the at least one cell when a voltage of the at least one cell is greater than a preset value;
- the at least one battery cell is of the lithium-ion type.

According to another aspect, the invention provides a rechargeable battery, comprising:
- at least one rechargeable battery cell;
- two connecting terminals adapted to connect the battery to an external electric circuit, to provide a charge current to the at least one battery cell and to output a discharge current provided by the at least one battery cell;
- a transistor adapted to provide a variable resistance;
- a shunt resistor;
- a transistor control circuit; and
- a diode;
wherein:
- the at least one battery cell, the transistor and the shunt resistor are connected in series between the two connecting terminals;
- the transistor control circuit is adapted to vary the resistance provided by the transistor for limiting the charge current provided to the at least one cell depending on the amperage sensed by the shunt resistor; and
- the diode is connected in parallel with both the transistor and the shunt resistor to allow the discharge current provided by the at least one battery cell to bypass the transistor and the shunt resistor.

In preferred embodiments, the rechargeable battery comprises any one of the following features or a combination thereof:
- a temperature sensor adapted to sense a temperature of the transistor and
wherein the transistor control circuit is further adapted to vary the resistance provided by the transistor depending on the temperature sensed by the temperature sensor;
- the temperature sensor comprises a thermistor;
- an overcharge protection circuit adapted to cause the transistor to interrupt the charge current provided to the at least one cell when a voltage of the at least one cell is greater than a preset value;
- an overcharge protection circuit adapted to cause the transistor to interrupt the charge current provided to the at least one cell when a voltage of the at least one cell is greater than a preset value;
- an overcharge protection circuit and a switch wherein the at least one battery cell, the transistor, the switch and the shunt resistor are connected in series between the two connecting terminals; the diode is connected in parallel with the switch, the transistor and the shunt resistor to allow a discharge current provided by the at least one battery cell to bypass the switch, the transistor and the shunt resistor for reaching the two terminals; and the overcharge protection circuit is adapted to open the switch when a voltage of the at least one cell is greater than a preset value;
- the at least one battery cell is of the lithium-ion type.

Additional objects, advantages and features of the various aspects of the present invention will become apparent from the following description of its preferred embodiments which is given in conjunction to the accompanying drawings, the description of these embodiments being given as non-limiting examples.

### BRIEF DESCRIPTION OF THE DRAWINGS

Fig. 1 schematically shows a first embodiment of a rechargeable battery according to the invention.
Fig. 2 shows curves illustrating the change of physical values during the charging operation of a battery of the type of Fig. 1

### DETAILED DESCRIPTION OF THE INVENTION

The invention provides a rechargeable battery, comprising at least one rechargeable battery cell, a current regulator and a bypass circuit. The current regulator is adapted to vary a charge current provided to the at least one battery cell. The bypass circuit is adapted to allow a discharge current provided by the at least one battery cell to bypass the current regulator.

So, there is no need to fit the external current-generating equipment used to charge the battery with an adapted current regulator as it is included in the battery while this current regulator does not disturb the current discharge flow of the battery when supplying a load, due to the bypass circuit. Such a battery can advantageously be used in various existing applications to replace other type of batteries for which the current-generating equipment of the application for charging the battery was originally designed without requiring a modification of this current-generating equipment.

In particular, the current regulator can be designed to limit the charge current provided to the at least one battery cell which makes its particularly adapted for low-impedance batteries of Li-Ion type or others. So, on the one hand, the current regulator makes it possible to limit the charge current and hence to prevent the battery itself and/or the battery charger or current-generating equipment used to charge the battery from being damaged by too high charge currents. On the other hand, the diode provides for the possibility to supply a load connected to the battery with a high discharge current without interference from the current regulator.

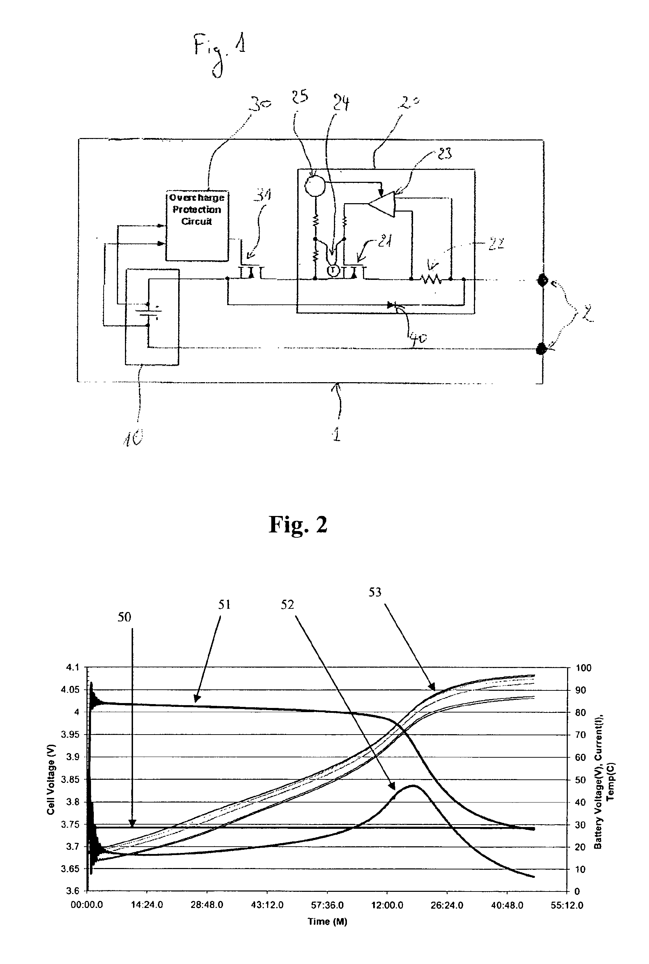

Fig. 1 illustrates a rechargeable Li-Ion battery according to a preferred embodiment of the invention. This battery is particularly adapted to use in aircraft and automotive applications in which the battery is connected to a power bus on a continuous basis serving both to charge the battery and to supply a load, in particular to start an engine.

The battery comprises a rechargeable battery cell arrangement 10. Arrangement 10 comprises at least one but more generally a plurality of rechargeable Li-Ion cells connected in series and/or in parallel. The number of cells connected in series and/or in parallel is determined according to the requirements of the application as known in the art.

Battery cell arrangement 10 has a positive pole and a negative pole connected to a respective connecting terminal 2 arranged on a casing 1. Connecting terminals 2 serve to connect the battery to the power bus of the aircraft or of the automotive application.

The battery also includes a current regulator 20. Current regulator 20 is used to limit the charge current provided to battery cell arrangement 10 by an external battery charger or current-generating equipment connected to the power bus of the application. Current regulator 20 comprises a power transistor 21 connected in series with battery cell arrangement 10. More precisely, transistor 21 is interposed between one pole of battery cell arrangement 10 and the corresponding connecting terminal 2. Transistor 21 is advantageously a Field Effect Transistor (F.E.T.) used as a variable resistance. In particular, transistor 21 may be of an N-F.E.T. type. As a result, transistor 21 makes it possible to introduce an impedance in the charge path between battery cell arrangement 10 and the external battery charger or current-generating equipment - not shown - connected to the power bus of the application.

A shunt resistor 22 is connected in series with battery cell arrangement 10 for sensing the charge current provided to battery cell arrangement 10 by the external battery charger or current-generating equipment.

The resistance provided by transistor 21 in the charge path of battery cell arrangement 10 is varied depending on the current amperage sensed by shunt 22. Therefore, current regulator 20 comprises an amplifier 23 - such as an operational amplifier - measuring the current sensed by shunt 22. As the sensed current approaches a preset current value or goes above this preset value, amplifier 23 causes the resistance provided by transistor 21 to increase in order to limit the charging current so as to prevent it from exceeding the preset value. Thereby, the value of the charge current is maintained low enough to avoid damage to the battery arrangement itself and/or to the external battery charger/current-generating equipment which may not be designed for providing higher charge currents.

Amplifier 23 is supplied by a power source 25 in a known manner. Power source 25 is preferably fed by battery cell arrangement 10 itself.

A diode 40 is connected in parallel with transistor 21. The polarity of diode 40 is such that it is conducting for the discharge current provided by battery cell arrangement 10 to an external load connected to the power bus, thereby bypassing transistor 21. On the contrary, charge currents provided by an external battery charger/current-generating equipment to battery cell arrangement 10 do not flow through diode 40, but through transistor 21.

Diode 40 is adequately sized in consideration of the high discharge current that battery cell arrangement 10 may have to provide to the external load, e.g. when used for starting an engine.

Although not mandatory, it is preferable that diode 40 is also connected in parallel with shunt 22. In other words, diode 40 is connected in parallel with a branch comprising transistor 21 and shunt 22 connected in series. Thus, shunt 22 is only in the charge path, but not in the discharge path of battery cell arrangement 10. This is possible as shunt 22 does not serve in regulating the discharge current, but only the charge current of battery cell arrangement 10. So, shunt 22 does not introduce energy losses when supplying an external load with the battery and shunt 22 has not to be sized in consideration of the discharge current value which may be much higher than the charge current value.

Optionally, current regulator 20 also comprises a temperature sensor 24 for sensing the temperature of transistor 21 and reducing the charge current if the temperature of transistor 21 gets too high. In this example, temperature sensor 24 is a thermistor. When the temperature of transistor 21 gets too high, thermistor 24 overrides the operation of amplifier 23 by reducing the control voltage of the gate of transistor 21 thereby increasing the resistance provided by transistor 21 in the charge path. As a result, the charge current provided to battery cell arrangement 10 is reduced. Hence, it prevents the temperature of transistor 21 from getting too high thereby preventing damage to transistor 21. It also prevents damage to the battery cells of arrangement 10 which may occur if their temperature gets too high due to the fact that the heat dissipated by transistor 21 may warm up the battery cells in view of the fact that current regulator 20 and the battery cells are preferably contained within the same closed casing 1. As depicted in Fig. 1, this effect can be obtained by connecting thermistor 24 between the gate of transistor 21 and the common point of two resistors connected in series between power source 25 and the charge path branch comprising transistor 21.

Optionally, the battery may also comprise an overcharge protection circuit 30 to prevent the battery cells of arrangement 10 from getting overcharged due to high charger voltage. As known, Li-Ion cells may get unstable if charged to too high voltages. Therefore, protection circuit 30 controls a further transistor 31 used as a switch. Transistor 31 is connected in series with battery cell arrangement 10. More precisely, transistor 31 is connected in the charge path of battery cell arrangement 10. Protection circuit 30 senses the voltage of each battery cell of arrangement 10. In normal charging condition, transistor 31 is closed and charge currents flow through it toward battery cell arrangement 10. In the case the voltage of any battery cell of arrangement 10 gets above a preset value, protection circuit 30 causes transistor 31 to open the charge path thereby interrupting the charge current provided to battery cell arrangement 10. Diode 40 is also connected in parallel with transistor 31, so transistor 31 is not included in the discharge path of battery cell arrangement 10, but only in its charge path. In other words, diode 40 is connected in parallel with a branch comprising transistor 31, transistor 21 and shunt 22 which are all connected in series. Overcharge protection circuit 30 is not described in more detail as such circuits are derivable from the art.

In an alternative embodiment, transistor 31 is omitted and protection circuit 30 controls transistor 21 instead. As long as no overcharge condition is detected by protection circuit 30, current regulator 20 including transistor 21 work as already described. Where an overcharge condition is detected as previously described, protection circuit 30 overrides the usual working of current regulator 20 and causes transistor 21 to open the charge path thereby interrupting the charge current provided to battery cell arrangement 10.

Overcharge protection circuit 30 may be omitted e.g. where the battery cells are of another type than Li-Ion which does not require protection against overcharging.

The battery may also comprise further protection circuits depending on the type of the rechargeable cells that are used. In particular, it may comprise protection circuits preventing battery cell arrangement 10 from discharging too much by cutting off the discharge path e.g. when the voltage at battery cell arrangement 10 becomes too low. It may also comprise mechanical pressure switches on battery cells which open the charge path if a safe pressure threshold is exceeded.

All the mentioned protective devices ― current regulator 20, protection circuit 30, etc. - can advantageously be housed with battery cell arrangement 10 inside casing 1 of the battery. As a result, the battery contains all required regulation and protection devices. Such a battery can be used in applications that were designed originally for other types of batteries such as lead acid batteries without requiring a change of the charger or current-generating equipment design of such applications.

The curves of Fig. 2 illustrate the charging operation of a battery of the type of Fig. 1**.** In the present case, battery cell arrangement 10 was made of seven Li-Ion cells in series. The x-axis represents time and is graduated in minutes while the y-axis represents the following:
- curve 50: the battery voltage;
- curve 51: the temperature of transistor 21;
- curve 52: the charging current provided to the battery;
- curves 53: the voltage at each battery cell.

The current regulator was designed to prevent the current from exceeding 48 A and the temperature of transistor 21 from exceeding 85°C. The voltage of the power bus in the application was 28.5 V DC and is shown to be stable throughout the charge period of the battery while the voltage of each of the seven battery cells increases from 3.68 V to 4.05 V.

Where the battery cell arrangement 10 of this battery is connected directly to the same power bus, the voltage of the power bus is dragged down to as low as the sum of the voltages of the seven cells, i.e. about 25.7 V. The charge current is only limited by the internal impedance of battery cell arrangement 10 and reaches over 500 A. Where the current-generating equipment used to supply the power bus is designed for less than the amperage absorbed by the battery, the generating equipment could be damaged.

The above description of the invention is intended to be illustrative and not limiting. Various changes or modifications in the embodiments described may occur to those skilled in the art without departing from the spirit or scope of the invention.

For example, the invention is not limited to Li-Ion batteries, but could be any other type of secondary batteries having electrochemical cells such as Li-Ion-Polymer batteries or Nickel-Metal-Hydride batteries.

Further, current regulator 20 can be implemented in different ways e.g. as a switching mode power supply. In particular, transistor 21 can be used as a chopper opening and closing the charge path at high frequency instead of being used as a variable resistor. So, when the charge current remains below a preset value, transistor 21 is maintained permanently closed and thus allows the charge current to continuously flow through it. When the charging current reaches or exceeds the preset value, transistor 21 acts as a chopper the duty cycle of which is varied so as to maintain the mean amperage below the preset value. When transistor 21 is used as a variable resistance as described in relation to Fig; 1, it is the instantaneous value of the charge current which is maintained below the preset value.

Furthermore, the battery was described with only two connecting terminals for providing the charge current to battery cell arrangement 10 and for outputting the discharge current provided by battery cell arrangement 10 to an external load. Alternatively, the battery could have three connecting terminals: a common one connected to one pole of battery cell arrangement 10, a second one for providing the charge current to battery cell arrangement 10 along with the common one and a third one for outputting the discharge current provided by battery cell arrangement cell 10 to an external load along with the common one. But the embodiment with only two connecting terminals is preferred as existing applications usually are designed for batteries with only two terminals serving for the charge and the discharge of the battery cells.

## Claims

1. A rechargeable battery, comprising:
- at least one rechargeable battery cell;
- a current regulator adapted to vary a charge current provided to the at least one battery cell; and
- a bypass circuit adapted to allow a discharge current provided by the at least one battery cell to bypass the current regulator.

2. The rechargeable battery according to claim 1, further comprising two connecting terminals adapted:
- to connect the battery to an external electric circuit;
- to provide the charge current to said at least one battery cell; and
- to output the discharge current provided by the at least one battery cell.

3. The rechargeable battery according to claim 1 or 2, further comprising a temperature sensor adapted to sense a temperature of the current regulator and wherein the current regulator is adapted to limit the charge current provided to the at least one cell depending on the temperature sensed by the temperature sensor.

4. The rechargeable battery according to claim 3, wherein the temperature sensor comprises a thermistor.

5. The rechargeable battery according to any one of claims 1 to 4, further comprising an overcharge protection circuit adapted to interrupt the charge current provided to the at least one cell when a voltage of the at least one cell is greater than a preset value.

6. The rechargeable battery according to any one of claims 1 to 5, further comprising a current sensor adapted to sense an amperage of the charge current provided to the at least one cell, the current regulator being adapted to limit the charge current provided to the at least one cell depending on the amperage sensed by the current sensor.

7. The rechargeable battery according to claim 6, wherein the current regulator comprises:
- a transistor adapted to provide a variable resistance;
- a transistor control circuit;
wherein:
- the transistor and the at least one battery cell are connected in series between the two connecting terminals; and
- the transistor control circuit is adapted to vary the resistance provided by the transistor for limiting the charge current provided to the at least one cell depending on the amperage sensed by the current sensor.

8. The rechargeable battery according claim 6, wherein the current regulator comprises:
- a transistor;
- a transistor control circuit;
wherein:
- the transistor and the at least one battery cell are connected in series between the two connecting terminals; and
- the transistor control circuit is adapted to cause the transistor to work as a chopper having a variable duty cycle and to vary the duty cycle for limiting the charge current provided to the at least one cell depending on the amperage sensed by the current sensor.

9. The rechargeable battery according to any one of claims 6 to 8, wherein the current sensor comprises a shunt resistor connected in series with the at least one battery cell.

10. The rechargeable battery according to claim 9, wherein the bypass circuit is further adapted to allow the discharge current provided by the at least one battery cell to bypass the shunt resistor.

11. The rechargeable battery according to any one of claims 1 to 10, wherein the bypass circuit comprises a diode connected to allow the discharge current provided by the at least one battery cell to bypass the current regulator.

12. The rechargeable battery according to any one of claims 1 to 11, wherein the at least one battery cell is of the lithium-ion type.
